# EUROPÄISCHE PATENTSCHRIFT

(11) **EP 2 663 781 B1**
(45) Veröffentlichungstag und Bekanntmachung des Hinweises auf die Patenterteilung: **23.03.2016**
(21) Anmeldenummer: 12700317.6
(22) Anmeldetag: 12.01.2012
(51) Int. Cl.: F16D 3/68, F16D 3/76

(54) **KUPPLUNG ZUM DÄMPFENDEN VERBINDEN ZWEIER WELLENABSCHNITTE INSBESONDERE EINER LENKWELLE, SOWIE LENKWELLE UND VERFAHREN ZUR HERSTELLUNG EINER ENTSPRECHENDEN KUPPLUNG**
COUPLING FOR CONNECTING TWO SHAFT SECTIONS, IN PARTICULAR OF A STEERING SHAFT, IN A DAMPING MANNER, STEERING SHAFT, AND METHOD FOR PRODUCING A CORRESPONDING COUPLING
ACCOUPLEMENT PERMETTANT UNE LIAISON À AMORTISSEMENT DE DEUX PARTIES D'ARBRE, EN PARTICULIER D'UN ARBRE DE DIRECTION, ARBRE DE DIRECTION CORRESPONDANT, ET PROCÉDÉ DE PRODUCTION D'UN ACCOUPLEMENT CORRESPONDANT

(30) Priorität: 12.01.2011 DE 102011008396
(43) Veröffentlichungstag der Anmeldung: 20.11.2013
(73) Patentinhaber: Süddeutsche Gelenkscheibenfabrik GmbH & Co. KG, 84478 Waldkraiburg (DE)
(72) Erfinder: HUBER, Armin, 84573 Schönberg (DE); POEPPELBAUM, Udo, 84565 Oberneukirchen (DE); HOFFMANN, Jan, 84478 Waldkraiburg (DE); MORAWIETZ, Markus, 84424 Isen (DE); PETRIK, Stephan, 83527 Haag (DE); EICHER, Andreas, 84555 Jettenbach (DE); STUBENRAUCH, Josef, 83543 Rott am Inn (DE)
(74) Vertreter: Thum, Bernhard
(86) Internationale Anmeldenummer: PCT/EP2012/000131
(87) Internationale Veröffentlichungsnummer: WO 2012/095319

(56) Entgegenhaltungen:
- EP-A2- 1 260 725
- WO-A1-2010/102611
- DE-A1-102004 051 566
- JP-A- 2007 120 592
- US-A- 5 460 574

## Beschreibung

Die vorliegende Erfindung betrifft eine Kupplung zum dämpfenden Verbinden zweier Wellenabschnitte, vorzugsweise zweier Wellenabschnitte einer Lenkwelle für ein Fahrzeuglenksystem, wobei die Kupplung eine Buchsenanordnung mit einer bezüglich einer zentralen Längsachse radial inneren Buchse und einer radial äußeren Buchse aufweist, wobei die radial innere Buchse mit einem ersten Wellenabschnitt und die radial äußere Buchse mit einem zweiten Wellenabschnitt drehmomentübertragend koppelbar ist, wobei zwischen der radial inneren Buchse und der radial äußere Buchse eine Dämpfungsschicht vorgesehen ist.

Eine derartige Kupplung ist aus dem Stand der Technik bekannt. So zeigt beispielsweise das Dokument EP 1 260 725 B2 eine derartige elastische Wellenkupplung. Bei dieser ist vorgesehen, ein in einem Längsschnitt U-förmiges Teil auf eine Welle aufzupressen, das im Inneren des U-Profils einen rohrförmigen Körper aufnimmt und diesen über eine Dämpfungsschicht trägt. Die Dämpfungsschicht kann unterschiedlich, gemäß einer Ausführungsform beispielsweise zick-zack-förmig, ausgebildet sein. Diese Kupplung ist in der Herstellung relativ kompliziert und erfordert insbesondere eine aufwändige Buchsenanordnung, vor allem dann, wenn eine zick-zack-förmige Dämpfungsschicht eingesetzt werden soll.

Aus dem Dokument DE 102 25 672 A1 ist eine Wellenkupplung bekannt, bei der zwischen der Innenbuchse und einer Außenbuchse vereinzelte Dämpfungsschichten angebracht sind. Diese erstrecken sich jedoch über die gesamte axiale Länge.

Eine ähnliche Lösung ist in Dokument JP 2007-120592 A offenbart.

Das Dokument EP 1 260 725 B2 zeigt Kupplungsanordnungen, bei denen verschieden geformte Dämpfungsschichten zwischen zwei zylindrischen Kupplungsteilen auf Scherung belastet werden. Derartige Kupplungen sind nicht geeignet, um hohe Drehmomente zu übertragen.

Es ist eine Aufgabe der vorliegenden Erfindung, eine Kupplung der eingangs bezeichneten Art bereitzustellen, die bei kostengünstiger und einfacher Herstellung vorteilhafte Dämpfungseigenschaften aufweist.

Diese Aufgabe wird durch eine Kupplung der eingangs bezeichneten Art gelöst, bei der vorgesehen ist, dass die Buchsenanordnung in Richtung der Längsachse betrachtet, umlaufend wellenförmige Kontur aufweist, wobei die radial innere Buchse und die radial äußere Buchse ineinander greifende Wellenkonturen aufweisen und wobei die Dämpfungsschicht mit axialen Ausnehmungen versehen ist, die sich wechselseitig von beiden axialen Enden der Kupplung in die Dämpfungsschicht hinein erstrecken, so dass sich alternierend in Umfangsrichtung an den axialen Enden der Kupplung zwischen radial innerer und radial äußerer Buchse Dämpfungsblöcke ausbilden und wobei die Ausnehmungen von dem Material der Dämpfungsschicht umschlossen sind.

Erfindungsgemäß umfasst die Buchsenanordnung lediglich eine radial innere Buchse und eine radial äußere Buchse, die mit zueinander komplementärem wellenförmigem Profil rohrförmig ausgebildet sind und in ihrem Zwischenraum die Dämpfungsschicht aufweisen. Diese Dämpfungsschicht besteht nicht etwa aus einer durchgehenden Schicht, sondern aus einzelnen Dämpfungsblöcken, die alternierend in Umfangsrichtung betrachtet an den axialen Enden der Kupplung zwischen der radial inneren und der radial äußeren Buchse angeordnet sind. Dadurch ergibt sich eine beanspruchungsgerechte Belastung der Dämpfungsschicht, ohne dass überflüssiges Dämpfungsmaterial im Zwischenraum angeordnet wird. Im Falle einer torsionalen Beanspruchung, wie sie bei einer Lenkwelle regelmäßig auftritt, werden die einzelnen Dämpfungsblöcke im Wesentlichen druckbeansprucht, d.h. sie werden zwischen den einzelnen Wellenflanken zusammengedrückt. Je nach Ausgestaltung der Wellenkontur lässt sich so eine mehr oder weniger starke Druckbeanspruchung bzw. Schubbeanspruchung einstellen, je nach gewünschter Torsionssteifigkeit. In axialer Richtung werden die einzelnen Dämpfungsblöcke ausschließlich schubbeansprucht, wobei sich eine relativ weiche Axialkennlinie ergibt. Allerdings sind derartige Schubbeanspruchungen bei Lenkwellen von untergeordneter Bedeutung. Im Beugungsfall werden die einzelnen Dämpfungsblöcke wiederum hauptsächlich druckbeansprucht mit mehr oder weniger großen Anteilen einer Schubbeanspruchung, je nach gewünschter Beugesteifigkeit. Auch ist es möglich, die Dämpfungsschicht zu kalibrieren, d.h. vorzuspannen. Das kann dadurch erfolgen, dass diese in den Zwischenraum oder in die radial äußere Buchse eingepresst oder aber auf die radial innere Buchse aufgepresst wird.

Bei der Montage kann die Lenkwelle mit einer derartigen Kupplung teleskopiert werden, d.h. die einzelnen Lenkwellenabschnitte lassen sich ineinanderstecken, was die Montage vereinfacht. In einer Crash-Situation kann die Lenkwelle sogar vollständig teleskopieren, da - wie vorstehend ausgeführt - bei axialer Belastung, ausschließlich auf Schub beansprucht werden und deshalb bei hinreichend großen Kräften sich schließlich von der Buchsenanordnung lokal lösen und so eine axiale Relativbewegung der beiden Wellenabschnitte zueinander erlauben.

Hinsichtlich der Ausgestaltung der Buchsenanordnung kann gemäß einer Weiterbildung der Erfindung vorzugsweise vorgesehen sein, dass die Buchsenanordnung in Richtung der Längsachse betrachtet sternförmige oder kleeblattförmige Kontur aufweist. Eine sternförmige oder kleeblattförmige Kontur bietet den Vorteil, dass sich an der inneren und äußeren Buchse einander zugewandte Flanken bilden, über die bei torsionaler Beanspruchung vornehmlich Druckkräfte übertragen werden können. Schwer kontrollierbare Schub- bzw. Scherbeanspruchungen können somit weitgehend unterbunden werden, sofern erwünscht. Darüber hinaus bietet eine solche sternförmige oder kleeblattförmige Kontur den weiteren Vorteil, dass die beiden Wellenabschnitte selbst bei einem Versagen der Dämpfungsschicht hinreichend zueinander verdrehgesichert sind, so dass die Lenkwellenanordnung weiter Drehmomente übertragen kann. Die beiden Buchsen können konzentrisch oder exzentrisch über die Dämpfungsschicht miteinander verbunden sein. Die konzentrische Anordnung bietet sich im Kraftfahrzeugbereich an. Die exzentrische Anordnung kann bei einer Aggregatlagerung im allgemeinen Maschinenbau in Frage kommen. Die Dämpfungsschicht ist in Umfangsrichtung entweder gleichbleibend dick oder mit variabler Dicke in Abhängigkeit von den ineinandergreifenden Profilen der beiden Buchsen ausgebildet.

Erfindungsgemäß kann bei einer Ausführungsvariante vorgesehen sein, dass die Buchsenanordnung in ihrem Ausgangszustand als einstückiges Bauteil ausgebildet ist, wobei die radial innere Buchse mit der radial äußeren Buchse über wenigstens einen als Sollbruchstelle ausgebildeten Verbindungssteg verbunden ist, der durch Relativverlagerung der radial inneren Buchse zur radial äußeren Buchse aufbrechbar ist. Dabei ist es möglich, dass die Buchsenanordnung aus Kunststoff hergestellt ist.

Es ist darauf hinzuweisen, dass der oder die Verbindungsstege, die als Sollbruchstellen agieren, zusätzlich auch noch als radiale Anschläge dienen, so dass eine maximale Auslenkung zwischen der radial inneren und der radial äußeren Buchse über diese Verbindungsstege definiert werden kann.

Je nach Bedarf können die Dämpfungsblöcke zwischen den wellenförmigen Buchsen der Buchsenanordnung vorgesehen sein. Vorzugsweise ist vorgesehen, dass die Dämpfungsblöcke zwischen radial innerer und radial äußerer Buchse jeweils im Bereich einer Flanke einer einzelnen Welle angeordnet sind. Dabei ist es möglich, die Dämpfungsblöcke in begrenzten Bereichen regelmäßig oder unregelmäßig anzuordnen. Eine bevorzugte Ausführungsform der Erfindung sieht vor, dass sich die Dämpfungsblöcke jeweils vom Wellental zum Wellenberg erstrecken. Bei einer derartigen Anordnung der Dämpfungsblöcke lassen sich über die Dämpfungsblöcke große Dämpfungskräfte aufnehmen und entsprechend große Drehmomente übertragen.

Ferner kann in diesem Zusammenhang vorgesehen sein, dass die Dämpfungsblöcke in Umfangsrichtung um die Längsachse betrachtet an einem axialen Ende der Kupplung an der jeweils vorlaufenden Flanke der einzelnen Wellen und am anderen axialen Ende der Kupplung an der jeweils nachlaufenden Flanke der einzelnen Wellen vorgesehen ist. Mit anderen Worten bedeutet dies, dass die Dämpfungsblöcke am einen axialen Ende der Kupplung zur Übertragung von Drehmomenten (Druckbeanspruchung) in der einen Drehrichtung und am anderen axialen Ende zur Übertragung von Drehmomenten in der anderen Drehrichtung ausgebildet sind.

Um Kerbwirkungen in der Dämpfungsschicht zu vermeiden, sieht eine Weiterbildung der Erfindung vor, dass die Ausnehmungen gerundete, an den Wellenverlauf angepasste Geometrie aufweisen. Je nach Wellenverlauf und Flankenverlauf der einzelnen Buchsen werden die Ausnehmungen mehr oder weniger geradlinig ausgebildet. Ferner ist vorgesehen, dass die Ausnehmungen von dem Material der Dämpfungsschicht umschlossen sind, d.h. dass an den Buchsen noch jeweils Dämpfungsschichtmaterial auch im Bereich der Ausnehmungen mit geringer Dicke angebunden ist.

Ferner ist es möglich, dass die Ausnehmungen eine gerundete, eckige, C- bzw. U-förmige Kontur im Querschnitt aufweisen. So lässt sich auch über die Gestaltung der Querschnittsgeometrie der Ausnehmungen ein bestimmtes Dämpfungsverhalten erreichen. Beispielsweise ist es möglich, bei einer C- bzw. U-förmigen, auch kronenförmigen Querschnittsgeometrie nur einen schmalen Spalt, der sichelförmig ausgeprägt sein kann, als Ausnehmung zu erreichen. Dieser wird bei einer torsionalen Beanspruchung der erfindungsgemäßen Kupplung unter Last dann gegebenenfalls so verformt, dass er sich partiell auf ein Nennmaß von "null" reduziert, was zu einem additiven quasi-hydrostatischen Anteil im Dämpfungsverhalten führt. Dadurch kann die Torsionssteifigkeit des Bauteils deutlich erhöht werden. Je nach Gestaltung der Geometrie des Spalts kann in Abhängigkeit von den zu erwartenden Lasten eine definierbare Progression erreicht werden.

Eine Weiterbildung der Erfindung sieht vor, dass sich die Ausnehmungen in axialer Richtung über einen Teil oder über die volle Höhe einer Wellenflanke erstrecken. Erfindungsgemäß kann ferner vorgesehen sein, dass sich die Ausnehmungen in axialer Richtung über etwa zwei Drittel der axialen Länge der Buchsenanordnung erstrecken. Dadurch ergibt sich ein relativ geringer Volumenanteil von Dämpfungsmaterial am Gesamtvolumen der Kupplung, was zu Material- und Gewichtseinsparungen führt bei gleichbleibend vorteilhaften Dämpfungseigenschaften. Beispielhaft ist ein Volumenanteil von Dämpfungsmaterial von 25 bis 33 %.

Ferner ist es erfindungsgemäß möglich, dass sich die Ausnehmungen in axialer Richtung verjüngen. Auch durch diese Maßnahme lässt sich eine zusätzliche Progression durch die in axialer Richtung sich verjüngenden (konischen) Schlitze erreichen oder verstärken. Dies kann zusätzlich oder alternativ zu der vorstehend geschilderten Ausgestaltung der Ausnehmungen als schmale Spalte erfolgen. Eine geeignete Kombination der Ausbildung der Ausnehmungen als schmale Spalte (beispielsweise in C-Form) und der in axialer Richtung konischen Ausnehmungen kann zu einem besonders vorteilhaften progressiven Kupplungsverhalten führen.

Je nach Fertigungsaufwand ist es möglich, dass die einzelnen Dämpfungsblöcke in axialer Richtung im Wesentlichen vollständig voneinander getrennt sind. In diesem Zusammenhang ist festzuhalten, dass auch dann, wenn zwischen den einzelnen Dämpfungsblöcken in axialer Richtung noch eine dünne, nicht tragende Haut oder ein dünner Steg aus Dämpfungsmaterial stehen bleibt, dieser keine drehmomentübertragende oder dämpfende Eigenschaft aufweist. Eine derartige dünne Haut oder ein entsprechend dünner Steg zwischen zwei Dämpfungsblöcken an den entgegengesetzten axialen Enden der Kupplung ist daher erfindungsgemäß immer noch so zu verstehen, dass funktional die Dämpfungsblöcke voneinander unabhängig sind.

Eine Weiterbildung der Erfindung sieht vor, dass die radial innere Buchse auf einen Wellenansatz formschlüssig aufpressbar ist und dass die radial äußere Buchse in einer Aufnahme eines anderen Wellenansatzes formschlüssig aufnehmbar und mit diesem verstemmbar ist. Dies kann aber auch anderweitig erreicht werden, beispielsweise durch ein zusätzliches Sicherungsbauteil, wie beispielsweise einen Sicherungsring.

Vorzugsweise ist vorgesehen, dass die Dämpfungsschicht aus Gummi hergestellt ist. Wie vorstehend erläutert kann die Dämpfungsschicht kalibriert werden, indem sie einer Druckvorspannung durch Ein- oder Aufpressen ausgesetzt wird.

Die Erfindung betrifft ferner ein Verfahren zum Herstellen einer Kupplung der vorstehend beschrieben Art, umfassend die Schritte:
- Bereitstellen einer Buchsenanordnung mit einer radial inneren und einer radial äußeren Buchse,
- Einbringen einer Dämpfungsschicht zwischen der radial inneren und der radial äußeren Buchse,
- Eindrücken eines kronenartigen Formwerkzeugs mit Vorsprüngen von einer axialen Seite der Buchsenanordnung und eines kronenartigen Komplementär-Formwerkzeugs von der anderen axialen Seite der Buchsenanordnungen in die Dämpfungsschicht derart, dass die Dämpfungsschicht durch die eindringenden Vorsprünge mit axialen Ausnehmungen versehen wird, die sich wechselseitig von beiden axialen Enden der Kupplung in die Dämpfungsschicht hinein erstrecken, so dass sich an den axialen Enden der Kupplung zwischen radial innerer und radial äußerer Buchse Dämpfungsblöcke ausbilden, und
- Entfernen des Formwerkzeugs und des Komplementär-Formwerkzeugs.

Die Erfindung betrifft ferner eine Wellenanordnung, insbesondere eine Lenkwelle für ein Fahrzeuglenksystem mit zwei drehmomentübertragend zu koppelnden Wellenabschnitten und wenigstens einer Kupplung der vorstehend beschriebenen Art.

Die Erfindung wird im Folgenden beispielhaft anhand der beiliegenden Figuren erläutert. Es stellen dar:
- Fig. 1: eine Vorderansicht einer erfindungsgemäßen Anordnung zweier Lenkwellenabschnitte, die über eine erfindungsgemäße Kupplung drehmomentübertragend miteinander gekoppelt sind;
- Fig. 2: eine Schnittansicht entlang der Schnittlinie II-II aus Fig. 1;
- Fig. 3: eine Schnittansicht entlang der Schnittlinie III-III aus Fig. 2;
- Fig. 4: eine räumliche Darstellung der erfindungsgemäßen Kupplung;
- Fig. 5: eine Vorderansicht der Kupplung aus Fig. 4;
- Fig. 6: eine Schnittansicht der Kupplung aus Fig. 5 entlang der Schnittlinie VI-VI;
- Fig. 7: eine Vorderansicht der Dämpfungsschicht in Einzelteildarstellung;
- Fig. 8: eine Schnittansicht entlang der Schnittlinie VIII-VIII aus Fig. 7;
- Fig. 9: eine Vorderansicht der Buchsenanordnung im Ausgangszustand;
- Fig. 10: eine Schnittansicht der Buchsenanordnung entlang der Schnittlinie X-X aus Fig. 9;
- Fig. 11: eine Schnittansicht entsprechend Fig. 10, jedoch mit gelöster Sollbruchstelle; und
- Fig. 12-16: Ansichten einer weiteren Ausführungsform zu einer erfindungsgemäßen Kupplung, wobei

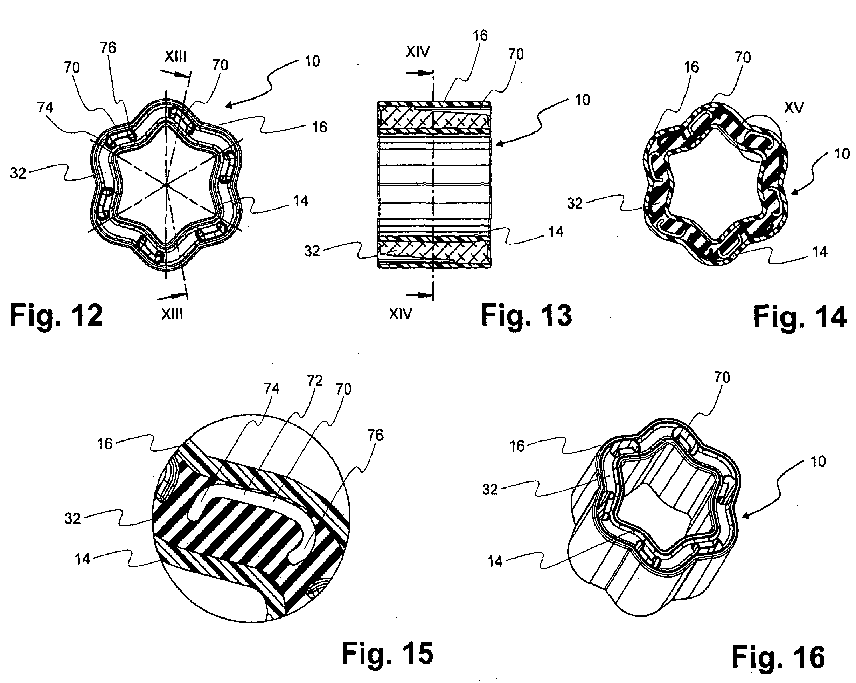

- Fig. 12: eine Vorderansicht,
- Fig. 13: eine achsenthaltende Schnittansicht entlang der Schnittlinie XIII-XIII aus Fig. 12;
- Fig. 14: eine Querschnittsansicht entlang der Schnittlinie XIV-XIV;
- Fig. 15: einen vergrößerten Ausschnitt aus Fig. 14 und
- Fig. 16: eine perspektivische Ansicht zeigen.

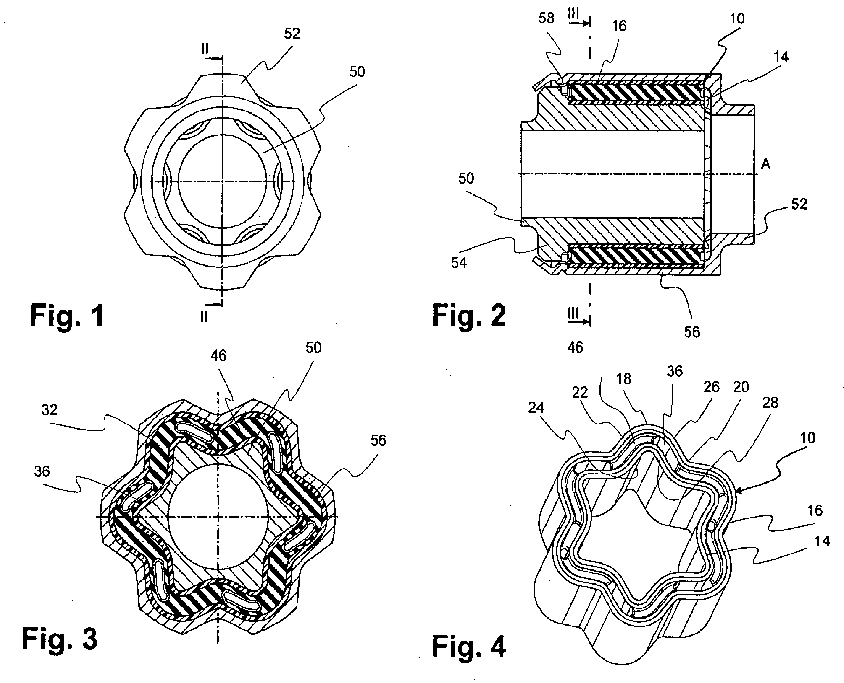

In den Figuren 1 bis 6 ist eine erfindungsgemäße Kupplung in verschiedenen Ansichten gezeigt und allgemein mit 10 bezeichnet. Diese umfasst eine Buchsenanordnung 12 aus Kunststoff, bestehend aus zwei Buchsen, nämlich einer radial inneren Buchse 14 und einer radial äußeren Buchse 16. Die beiden Buchsen 14 und 16 haben, wie in den Figuren 3, 4 und 5 erkennbar, eine gerundet sternförmige Außenkontur, oder anders ausgedrückt, eine wellenförmige geschlossene Außenkontur. Dadurch ergeben sich abwechselnd Wellenberge 18 und Wellentäler 20. Zwischen einem Wellenberg 18 und einem Wellental 20 erstreckt sich jeweils eine Flanke 22 an der radial äußeren Buchse 16 bzw. eine Flanke 24 an der radial inneren Buchse 14. Entsprechend sind auf der anderen Seite eines Wellenbergs 18 wiederum einander zugewandte Flanken 26, 28 vorgesehen. Aufgrund der regelmäßigen Gestalt der Buchsenanordnung 12, insbesondere der inneren und äußeren Buchsen 14 und 16, wiederholt sich die Anordnung aus Wellental 20, Wellenberg 18 und einander zugewandten Flanken mehrfach, in dem gezeigten Ausführungsbeispiel genau sechs mal.

Man erkennt, dass Wellenberge 18 und Wellentäler 20 jeweils gerundet ausgebildet sind. Die beiden Buchsen 14 und 16 sind derart dimensioniert, dass sich ein Zwischenraum 30 der Breite b zwischen ihnen ausbildet. Diese Breite b ist im Wesentlichen konstant über den gesamten Umfang. In diesem Zwischenraum 30 ist eine Dämpfungsschicht 32 eingebracht. Die Dämpfungsschicht 32 besteht aus Gummi. In diese Dämpfungsschicht 32 wiederum erstrecken sich in axialer Richtung Ausnehmungen 34 bzw. 36. Die Ausnehmungen 34 bzw. 36 haben eine Höhe h, die kleiner ist als die Breite b des Zwischenraums 30. Darüber hinaus haben die Ausnehmungen 34 bzw. 36 eine axiale Länge I, die etwa zwei Drittel der axialen Länge L der Kupplung 10 ist. Es verbleibt also in radialer Richtung beidseits der Ausnehmungen 34 und 36 eine Materialhaut 40 bzw. 42 an der inneren Buchse 14 und an der äußeren Buchse 16 haften.

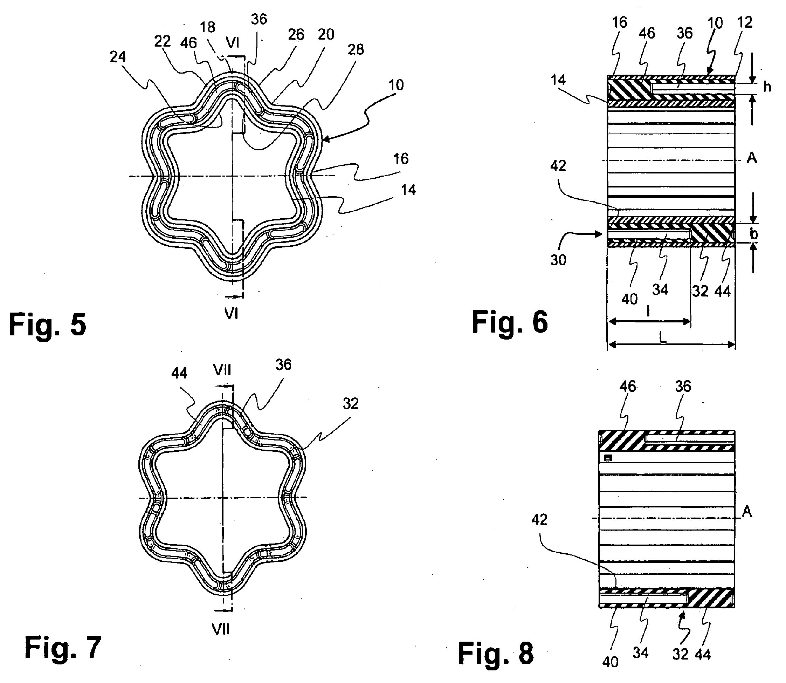

Am jeweiligen axialen Ende der Ausnehmungen 34, 36 bilden sich Dämpfungsblöcke 44, 46 aus. Diese Dämpfungsblöcke 44, 46 verbinden die radial innere Buchse 14 mit der radial äußeren Buchse 16 drehmomentübertragend. Wie man in den Ansichten gemäß Fig. 3, 4 und 5 erkennt, erstrecken sich diese Dämpfungsblöcke 44,46 jeweils zwischen gleichgerichteten Flanken. Betrachtet man beispielsweise die Figuren 4 und 5 im Uhrzeigersinn, so erkennt man, dass die Dämpfungsblöcke 46 jeweils in einem Wellental 20 beginnen, sich im Zwischenraum 30 zwischen den beiden Flanken 22 und 24 erstrecken und im Bereich eines Wellenbergs 18 enden. Zwischen den Flanken 26 und 28 ist dann eine Ausnehmung 34 vorgesehen. Eine entsprechende Anordnung findet sich dann am im Uhrzeigersinn betrachtet folgenden Wellental etc. Auf der axial entgegengesetzten Seite ist zwischen den Flanken 22 und 24 die Ausnehmung 36 vorgesehen, wobei sich der dortige Dämpfungsblock 44 zwischen den Flanken 26 und 28 erstreckt. Man erkennt also, dass die Dämpfungsblöcke wechselseitig an den axialen Enden zwischen den Flanken beidseits eines Wellenbergs bzw. eines Wellentals angeordnet sind. Die Dämpfungsblöcke 44 und 46 sind dabei im Wesentlichen voneinander unabhängig ausgebildet, d.h. sie sind nicht über in axialer Richtung verlaufende Stege miteinander verbunden. Fertigungsbedingt ist es zwar möglich, dass dünne Stege oder eine dünne Gummihaut im mittleren Bereich der Ausnehmungen 34 bzw. 36 stehen bleibt. Diese Stege oder diese Gummihaut haben bzw. hat aber keine drehmomentübertragende bzw. dämpfende Eigenschaft und sind bzw. ist daher funktional zu vernachlässigen.

In Figuren 7 und 8 erkennt man die Dämpfungsschicht 32 aus Gummi in Einzelteildarstellung mit den einzelnen Komponenten.

Figuren 1 bis 3 zeigen, wie die Kupplung 10 zwei Lenkwellenabschnitte 50, 52 miteinander verbindet. Der Lenkwellenabschnitt 50 weist dabei ebenfalls wellenförmige oder sternförmige Außenkontur auf und ist in die radial innere Buchse 14 formschlüssig eingepresst. Zur eindeutigen axialen Positionsdefinition ist eine Anlageschulter 54 vorgesehen. Der Wellenabschnitt 52 hingegen weist eine hohle Aufnahmebuchse 54 auf, die ebenfalls sternförmige Kontur aufweist. Diese nimmt formschlüssig die radial äußere Buchse 16 auf. Zur Sicherung ist die radial äußere Buchse dann im Bereich 58 verstemmt.

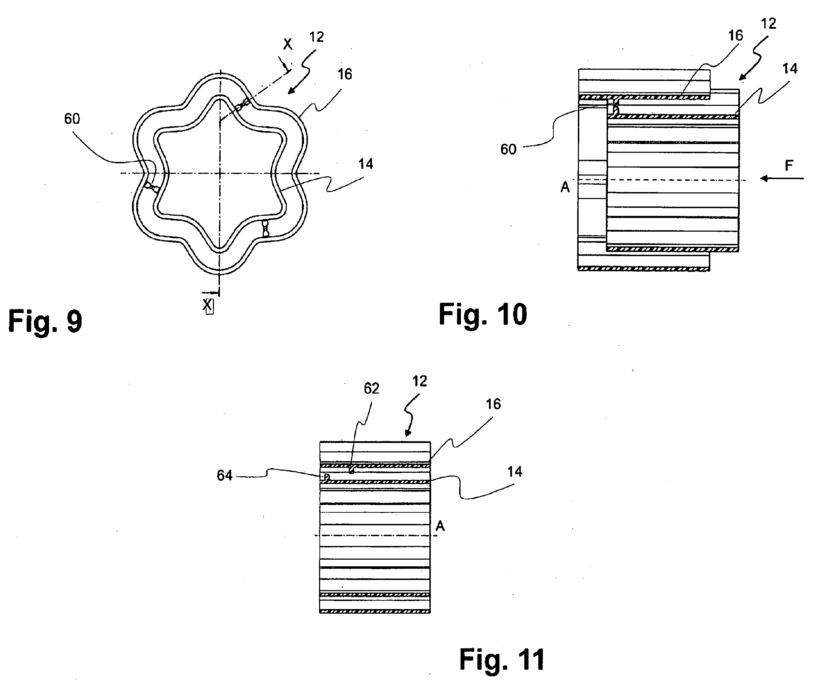

Figuren 9 bis 11 zeigen die Buchsenanordnung 12 in Einzelteildarstellung. Im Ausgangszustand gemäß Fig. 9 und 10 sind die radial äußere Buchse 16 und die radial innere Buchse 14 über Verbindungsstege 60 miteinander gekoppelt. Die Buchsenanordnung 12 ist als Kunststoffformteil ausgebildet und wird in der in Fig. 9 und 10 gezeigten Weise bereitgestellt. Bringt man in dem Zustand gemäß Fig. 9 und 10 auf die radial innere Buchse 14 relativ zur radial äußeren Buchse 16 eine axiale Druckkraft F auf, so kann die Sollbruchstelle in den Verbindungsstegen 60 aufgebrochen werden und man erhält den Zustand gemäß Fig. 11, wobei die Stege in zwei Bruchfragmenten 62 und 64 stehenbleiben. Diese können als radiale Anschläge zur Begrenzung der maximalen radialen Auslenkung zwischen radial innerer und radial äußerer Buchse 14 und 16 verwendet werden. In dem Zustand gemäß Fig. 11 wird schließlich die Dämpfungsschicht 32 zwischen die beiden Buchsen 14 und 16 eingebracht, so dass man die Kupplung entsprechend Fig. 5 und 6 erhält. Bei Einbringen der Dämpfungsschicht werden mittels kronenartiger Formwerkzeuge die Ausnehmungen 34 bzw. 36 ausgebildet und in der Folge mit diesen die Dämpfungsblöcke 44 bzw. 46.

Fig. 12 bis 16 zeigen eine weitere Ausführungsform der Erfindung in verschiedenen Ansichten. Dabei sind in die Dämpfungsschicht 32 U-förmige Ausnehmungen 70 eingebracht, wobei sich der U-Querschenkel 72 entlang der radial äußeren sternförmigen Buchse 16 erstreckt und die beiden U-Längsschenkel 74, 76 im Wesentlichen quer durch diese Dämpfungsschicht 32 hindurchlaufen. Insgesamt sind sechs derartige U-förmige Ausnehmungen 70 vorgesehen.

In der Schnittansicht gemäß Fig. 13 erkennt man, dass sich die Ausnehmungen 70 in axialer Richtung konisch verjüngen, d.h. dass ihre lichte Weite in axialer Richtung abnimmt. Man erkennt in Fig. 14, dass in etwa in der Mittelebene der Kupplung nur noch C-förmige Schlitze vorhanden sind, wie in Fig. 15 im Detail dargestellt. Diese sind vollständig in dem Gummimaterial der Dämpfungsschicht 32 eingebettet.

Fig. 16 zeigt schließlich die perspektivische Ansicht.

Mit der Ausführungsform gemäß Fig. 12 bis 16 lassen sich statt voluminösen Hohlräumen auch nur schmale sich in axialer Richtung konisch verjüngende sichelförmige Spalte 70 in das Dämpfungsmaterial 32 einbringen. Diese verformen sich bei der gezeigten Formgebung unter torsionaler Beanspruchung in Folge der einwirkenden Last gegebenenfalls derart, dass sie vollständig oder auch nur partiell auf ein Nennmaß von 0 zusammengepresst werden. Dadurch kann es zusätzlich zu einem additiven quasi-hydrostatischen Anteil im Dämpfungsverhalten kommen, der insbesondere die Torsionssteifigkeit der Kupplung deutlich erhöhen kann. Dieser Effekt lässt sich durch die in Axialrichtung konisch zulaufenden Schlitze verstärken.

Insgesamt ergibt sich erfindungsgemäß eine einfach herstellbare vorteilhafte Kupplung, bei der sich durch geeignete Dimensionierung der Dämpfungsblöcke gezielt gewünschte Drehmomentübertragungseigenschaften erreichen lassen. Bei torsionaler Beanspruchung werden die einzelnen Dämpfungsblöcke im Wesentlichen druckbeansprucht. Je nach Anzahl der Wellenberge bzw. Wellentäler lässt sich mehr oder weniger Druckbeanspruchung und eine mehr oder weniger starke Reduzierung von Schub- bzw. Scherbeanspruchungen erreichen. Die Anzahl der Wellenberge bzw.

Wellentäler und damit die Steilheit der Flanken (radialer Richtungskomponente) kann je nach gewünschter Torsionssteifigkeit ausgewählt werden. Ebenfalls hat die Wahl des Materials für die Dämpfungsschicht und deren Kalibrierung (Druckvorspannung) Einfluss auf die Torsionssteifigkeit. In axialer Richtung wird die Kupplung ausschließlich schubbeansprucht und ist relativ weich. Im Falle einer Beugungsbeanspruchung wird die Kupplung wiederum im Wesentlichen druckbeansprucht, wobei je nach Ausprägung auch Schubanteile mehr oder weniger stark zugelassen oder unterdrückt werden können.

Die erfindungsgemäßen Lösung ergibt eine kostengünstig herstellbare, in axialer Richtung weiche Kupplung nach dem tube-in-tube-Prinzip, die sich relativ einfach montieren lässt. Durch die Einbringung der Ausnehmungen in die Dämpfungsschicht kann erheblich Material eingespart werden, insbesondere Material im zentralen Bereich der Kupplung. Es hat sich gezeigt, dass Dämpfungsmaterial im zentralen Bereich der Kupplung zur relativ wenig Anteil an der Dämpfung und Drehmomentübertragung in den oben genannten Belastungsfällen hat, so dass dieses ohne weiteres eingespart werden kann.

## Patentansprüche

1. Kupplung (10) zum dämpfenden Verbinden zweier Wellenabschnitte (50, 52), vorzugsweise zweier Wellenabschnitte einer Lenkwelle für ein Fahrzeuglenksystem, wobei die Kupplung (10) eine Buchsenanordnung (12) mit einer bezüglich einer zentralen Längsachse (A) radial inneren Buchse (14) und einer radial äußeren Buchse (16) aufweist, wobei die radial innere Buchse (14) mit einem ersten Wellenabschnitt (50) und die radial äußere Buchse (16) mit einem zweiten Wellenabschnitt (56) drehmomentübertragend koppelbar ist, wobei zwischen der radial inneren Buchse (14) und der radial äußere Buchse (16) eine Dämpfungsschicht (32) vorgesehen ist, wobei die Buchsenanordnung (12) in Richtung der Längsachse (A) betrachtet, umlaufend wellenförmige Kontur aufweist, wobei die radial innere Buchse (14) und die radial äußere Buchse (16) ineinandergreifende Wellenkonturen aufweisen, **dadurch gekennzeichnet, dass** die Dämpfungsschicht (32) mit axialen Ausnehmungen (34, 36) versehen ist, die sich wechselseitig von beiden axialen Enden der Kupplung (10) in die Dämpfungsschicht (32) hinein erstrecken, so dass sich alternierend in Umfangsrichtung betrachtet an den axialen Enden der Kupplung (10) zwischen radial innerer und radial äußerer Buchse (14, 16) Dämpfungsblöcke (44, 46) ausbilden und wobei die Ausnehmungen von dem Material der Dämpfungsschicht umschlossen sind.

2. Kupplung (10) nach Anspruch 1,
**dadurch gekennzeichnet, dass** die Buchsenanordnung (12) in Richtung der Längsachse (A) betrachtet sternförmige oder kleeblattförmige Kontur aufweist.

3. Kupplung (10) nach Anspruch 1 oder 2,
**dadurch gekennzeichnet, dass** die Buchsenanordnung (12) in ihrem Ausgangszustand als einstückiges Bauteil ausgebildet ist, wobei die radial innere Buchse (14) mit der radial äußeren Buchse (16) über wenigstens einen als Sollbruchstelle ausgebildeten Verbindungssteg (60) verbunden ist, der durch Relativverlagerung der radial inneren Buchse (14) zur radial äußeren Buchse (16) aufbrechbar ist.

4. Kupplung (10) nach einem der vorangehenden Ansprüche,
**dadurch gekennzeichnet, dass** die Buchsenanordnung (12) aus Kunststoff hergestellt ist.

5. Kupplung (10) nach einem der vorangehenden Ansprüche,
**dadurch gekennzeichnet, dass** die Dämpfungsblöcke (44, 46) zwischen radial innerer und radial äußerer Buchse (14, 16) jeweils im Bereich einer Flanke (22, 24, 26, 28) einer einzelnen Welle angeordnet sind.

6. Kupplung (10) nach Anspruch 5,
**dadurch gekennzeichnet, dass** sich die Dämpfungsblöcke (44, 46) jeweils vom Wellental (20) zum Wellenberg (18) erstrecken.

7. Kupplung (10) nach Anspruch 5 oder 6,
**dadurch gekennzeichnet, dass** die Dämpfungsblöcke (44, 46) in Umfangsrichtung um die Längsachse (A) betrachtet an einem axialen Ende der Kupplung (10) an der jeweils vorlaufenden Flanke (22, 24) der einzelnen Wellen und am anderen axialen Ende der Kupplung (10) an der jeweils nachlaufenden Flanke (26, 28) der einzelnen Wellen vorgesehen ist.

8. Kupplung (10) nach einem der vorangehenden Ansprüche,
**dadurch gekennzeichnet, dass** die Ausnehmungen (34, 36) gerundete, an den Wellenverlauf angepasst die Geometrie aufweisen.

9. Kupplung (10) nach einem der vorangehenden Ansprüche,
**dadurch gekennzeichnet, dass** die Ausnehmungen (70) eine gerundete, eckige, C-bzw. U-förmige Kontur im Querschnitt aufweisen.

10. Kupplung (10) nach einem der vorangehenden Ansprüche,
**dadurch gekennzeichnet, dass** sich die Ausnehmungen (34, 36) in axialer Richtung (A) über einen Teil oder über die volle Höhe einer Wellenflanke (22, 24, 26, 28) erstrecken.

11. Kupplung (10) nach einem der vorangehenden Ansprüche,
**dadurch gekennzeichnet, dass** sich die Ausnehmungen (34, 36) in axialer Richtung (A) über etwa zwei Drittel der axialen Länge (L) der Buchsenanordnung (12) erstrecken.

12. Kupplung (10) nach einem der vorangehenden Ansprüche,
**dadurch gekennzeichnet, dass** sich die Ausnehmungen (70) in axialer Richtung verjüngen.

13. Kupplung (10) nach einem der vorangehenden Ansprüche,
**dadurch gekennzeichnet, dass** die einzelnen Dämpfungsblöcke (44, 46) in axialer Richtung (A) im Wesentlichen vollständig voneinander getrennt sind.

14. Kupplung (10) nach einem der vorangehenden Ansprüche,
**dadurch gekennzeichnet, dass** die radial innere Buchse (14) auf einen Wellenansatz (50) formschlüssig aufpressbar ist und dass die radial äußere Buchse (16) in einer Aufnahme (56) eines anderen Wellenansatzes (52) formschlüssig aufnehmbar und mit diesem verstemmbar ist.

15. Kupplung (10) nach einem der vorangehenden Ansprüche,
**dadurch gekennzeichnet, dass** die Dämpfungsschicht (32) aus Gummi hergestellt ist.

16. Verfahren zum Herstellen einer Kupplung nach einem der vorangehenden Ansprüche, umfassend die Schritte:
- Bereitstellen einer Buchsenanordnung mit einer radial inneren und einer radial äußeren Buchse,
- Einbringen einer Dämpfungsschicht zwischen der radial inneren und der radial äußeren Buchse-
- Eindrücken eines kronenartigen Formwerkzeugs mit Vorsprüngen von einer axialen Seite der Buchsenanordnung und eines kronenartigen Komplementär-Formwerkzeugs von der anderen axialen Seite der Buchsenanordnungen in die Dämpfungsschicht derart, dass die Dämpfungsschicht mit axialen Ausnehmungen versehen wird, die sich wechselseitig von beiden axialen Enden der Kupplung in die Dämpfungsschicht hinein erstrecken, so dass sich an den axialen Enden der Kupplung zwischen radial innerer und radial äußerer Buchse Dämpfungsblöcke ausbilden, und
- Entfernen des Formwerkzeugs und des Komplementär-Formwerkzeugs.

17. Lenkwelle für ein Fahrzeuglenksystem, umfassend zwei miteinander drehmomentübertragend zu koppelnde Lenkwellenabschnitte (50, 52) mit wenigstens einer Kupplung (10) nach einem der Ansprüche 1 bis 15.

## Claims

1. Coupling (10) for connecting two shaft sections (50, 52), preferably two shaft sections of a steering shaft for a vehicle steering system, in a damping manner, wherein the coupling (10) comprises a bushing arrangement (12) having, with respect to a central longitudinal axis (A), a radially inner bushing (14) and a radially outer bushing (16), wherein the radially inner bushing (14) can be coupled to a first shaft section (50) and the radially outer bushing (16) can be coupled to a second shaft section (56) so as to transmit torque, wherein a damping layer (32) is provided between the radially inner bushing (14) and the radially outer bushing (16), wherein the bushing arrangement (12) has a circumferential wave-shaped contour, as viewed in the direction of the longitudinal axis (A), wherein the radially inner bushing (14) and the radially outer bushing (16) have intermeshing wave contours, **characterised in that** the damping layer (32) is provided with axial recesses (34, 36), which extend alternately from both axial ends of the coupling (10) into the damping layer (32), so that damping blocks (44, 46) are formed alternately, as viewed in the circumferential direction, at the axial ends of the coupling (10) between the radially inner and radially outer bushing (14, 16) and wherein the recesses are enclosed by the material of the damping layer.

2. Coupling (10) according to Claim 1,
**characterised in that** the bushing arrangement (12) has a star-shaped or cloverleafshaped contour, as viewed in the direction of the longitudinal axis (A).

3. Coupling (10) according to Claim 1 or 2,
**characterised in that** the bushing arrangement (12) in its initial state is formed as a one-piece component, wherein the radially inner bushing (14) is connected to the radially outer bushing (16) via at least one connecting web (60) which is formed as a predetermined breaking point and can be broken open by relative displacement of the radially inner bushing (14) with respect to the radially outer bushing (16).

4. Coupling (10) according to one of the preceding claims,
**characterised in that** the bushing arrangement (12) is produced from plastic.

5. Coupling (10) according to one of the preceding claims,
**characterised in that** the damping blocks (44, 46) are arranged between the radially inner and radially outer bushing (14, 16) in each case in the region of a flank (22, 24, 26, 28) of an individual wave.

6. Coupling (10) according to Claim 5,
**characterised in that** the damping blocks (44, 46) extend in each case from the wave trough (20) to the wave crest (18).

7. Coupling (10) according to Claim 5 or 6,
**characterised in that** the damping blocks (44, 46) are provided at one axial end of the coupling (10) on the respectively leading flank (22, 24) of the individual waves and at the other axial end of the coupling (10) on the respectively trailing flank (26, 28) of the individual waves, as viewed in the circumferential direction about the longitudinal axis (A).

8. Coupling (10) according to one of the preceding claims,
**characterised in that** the recesses (34, 36) have rounded the geometry adapted to the wave course.

9. Coupling (10) according to one of the preceding claims,
**characterised in that** the recesses (70) have a rounded, angular, C- or U-shaped contour in cross-section.

10. Coupling (10) according to one of the preceding claims,
**characterised in that** the recesses (34, 36) extend in the axial direction (A) over part of or the full height of a wave flank (22, 24, 26, 28).

11. Coupling (10) according to one of the preceding claims,
**characterised in that** the recesses (34, 36) extend in the axial direction (A) over about two-thirds of the axial length (L) of the bushing arrangement (12).

12. Coupling (10) according to one of the preceding claims,
**characterised in that** the recesses (70) taper in the axial direction.

13. Coupling (10) according to one of the preceding claims,
**characterised in that** the individual damping blocks (44, 46) are substantially completely separated from one another in the axial direction (A).

14. Coupling (10) according to one of the preceding claims,
**characterised in that** the radially inner bushing (14) can be pressed onto a shaft neck (50) in a form-fitting manner and **in that** the radially outer bushing (16) can be received in a receptacle (56) of another shaft neck (52) in a form-fitting manner and be caulked to the latter.

15. Coupling (10) according to one of the preceding claims,
**characterised in that** the damping layer (32) is produced from rubber.

16. Method for producing a coupling according to one of the preceding claims, comprising the steps:
- providing a bushing arrangement having a radially inner and a radially outer bushing,
- fitting a damping layer between the radially inner and the radially outer bushing,
- pressing a crown-like die with projections from one axial side of the bushing arrangement and a crown-like complementary die from the other side of the bushing arrangements into the damping layer in such a way that the damping layer is provided with axial recesses which extend alternately from both axial ends of the coupling into the damping layer, so that damping blocks are formed at the axial ends of the coupling between the radially inner and radially outer bushing, and
- removing the die and the complementary die.

17. Steering shaft for a vehicle steering system, comprising two steering shaft sections (50, 52) which are to be coupled to one another so as to transmit torque, having at least one coupling (10) according to one of Claims 1 to 15.

## Revendications

1. Accouplement (10) destiné à relier de manière amortissante deux segments d'arbre (50, 52), de préférence deux segments d'un arbre de direction pour un système de direction de véhicule, l'accouplement (10) présentant un dispositif à manchons (12) comprenant un manchon radialement intérieur (14) et un manchon radialement extérieur (16) par rapport à un axe longitudinal central (A), le manchon radialement intérieur (14) pouvant être couplé, avec transmission du couple, à un premier segment d'arbre (50), et le manchon radialement extérieur (16) pouvant être couplé, avec transmission du couple, à un second segment d'arbre (56), une couche d'amortissement (32) étant prévue entre le manchon radialement intérieur (14) et le manchon radialement extérieur (16), le dispositif à manchons (12), vu dans la direction de l'axe longitudinal (A), présentant un profil périphérique ondulé, le manchon radialement intérieur (14) et le manchon radialement extérieur (16) présentant des contours ondulés en prise mutuelle, **caractérisé en ce que** la couche d'amortissement (32) est pourvue d'évidements axiaux (34, 36) qui s'étendent alternativement depuis les deux extrémités axiales de l'accouplement (10) à l'intérieur de la couche d'amortissement (32) de sorte que, vu dans la direction circonférentielle, des blocs d'amortissement (44, 46), se forment alternativement aux extrémités axiales de l'accouplement (10), entre le manchon radialement intérieur et le manchon radialement extérieur (14, 16), les évidements étant entourés par la matière dont est constituée la couche d'amortissement.

2. Accouplement (10) selon la revendication 1,
**caractérisé en ce que** le dispositif à manchons (12), vu dans la direction de l'axe longitudinal (A), présente un contour en étoile ou en feuille de trèfle.

3. Accouplement (10) selon la revendication 1 ou 2,
**caractérisé en ce que** le dispositif à manchons (12) est, dans son état initial, réalisé sous la forme d'une pièce monobloc, le manchon radialement intérieur (14) étant relié au manchon radialement extérieur (16) par le biais d'au moins une patte de liaison (60) formant une ligne de rupture, la rupture de la patte pouvant être obtenue par le déplacement relatif du manchon radialement intérieur (14) par rapport au manchon radialement extérieur (16).

4. Accouplement (10) selon l'une des revendications précédentes,
**caractérisé en ce que** le dispositif à manchons (12) est fabriqué en matière synthétique.

5. Accouplement (10) selon l'une des revendications précédentes,
**caractérisé en ce que** les blocs d'amortissement (44, 46) entre le manchon radialement intérieur (14) et le manchon radialement extérieur (16) sont respectivement disposés dans la zone d'un flanc (22, 24, 26, 28) d'un arbre.

6. Accouplement (10) selon la revendication 5,
**caractérisé en ce que** les blocs d'amortissement (44, 46) s'étendent respectivement depuis le creux (18) jusqu'au sommet (18) de l'ondulation.

7. Accouplement (10) selon la revendication 5 ou 6,
**caractérisé en ce que** les blocs d'amortissement (44, 46), vus dans la direction circonférentielle autour de l'axe longitudinal (A), sont disposés sur le flanc (22, 24) avant des arbres, à une extrémité axiale de l'accouplement (10), et sur le flanc arrière (26, 28) des arbres, à l'autre extrémité axiale de l'accouplement (10).

8. Accouplement (10) selon l'une des revendications précédentes,
**caractérisé en ce que** les évidements (34, 36) présentent une géométrie arrondie, adaptée à l'ondulation.

9. Accouplement (10) selon l'une des revendications précédentes,
**caractérisé en ce que** les évidements (70) présentent en section transversale un contour arrondi, angulaire, en forme de C ou en forme de U.

10. Accouplement (10) selon l'une des revendications précédentes,
**caractérisé en ce que** les évidements (34, 36) s'étendent dans la direction axiale (A) sur une partie ou sur toute la hauteur d'un flanc (22, 24, 26, 28) d'un arbre.

11. Accouplement (10) selon l'une des revendications précédentes,
**caractérisé en ce que** les évidements (34, 36) s'étendent dans la direction axiale (A) sur environ deux tiers de la longueur axiale (L) du dispositif à manchons (12).

12. Accouplement (10) selon l'une des revendications précédentes,
**caractérisé en ce que** les évidements (70) vont en s'amenuisant dans la direction axiale.

13. Accouplement (10) selon l'une des revendications précédentes,
**caractérisé en ce que** les différents blocs d'amortissement (44, 46) sont sensiblement complètement séparés les uns des autres dans la direction axiale (A).

14. Accouplement (10) selon l'une des revendications précédentes,
**caractérisé en ce que** le manchon radialement intérieur (14) peut être pressé par ajustement de forme sur le segment d'arbre (50) et que le manchon radialement extérieur (16) peut être logé par ajustement de forme dans un logement (56) d'un autre segment d'arbre (52) et maté avec celui-ci.

15. Accouplement (10) selon l'une des revendications précédentes,
**caractérisé en ce que** la couche d'amortissement (32) est fabriquée en caoutchouc.

16. Procédé pour fabriquer un accouplement (10) selon l'une des revendications précédentes, comportant les étapes suivantes :
- la mise à disposition d'un dispositif à manchons comprenant un manchon radialement intérieur et un manchon radialement extérieur,
- la mise en place d'une couche d'amortissement entre le manchon radialement intérieur et le manchon radialement extérieur,
- l'enfoncement dans la couche d'amortissement d'un outil de formage en forme de couronne pourvue de saillies, depuis un côté axial du dispositif à manchons, ainsi que l'enfoncement d'un outil de formage complémentaire en forme de couronne, depuis l'autre côté axial du dispositif à manchons, de sorte telle que la couche d'amortissement est pourvue d'évidements axiaux qui s'étendent alternativement à l'intérieur de la couche d'amortissement depuis les extrémités axiales de l'accouplement de façon que des blocs d'amortissement se forment aux extrémités axiales de l'accouplement, entre le manchon radialement intérieur et le manchon radialement extérieur, et
- le retrait de l'outil de formage et de l'outil de formage complémentaire.

17. Arbre de direction pour un système de direction de véhicule, comprenant deux segments d'arbre de direction (50, 52) à coupler l'un à l'autre, avec transmission du couple, et équipé d'au moins un accouplement (10) selon l'une des revendications 1 à 15.
